# EUROPEAN PATENT APPLICATION

(11) **EP 4 340 443 A1**
(43) Date of publication of application: **20.03.2024**
(21) Application number: 22807133.8
(22) Date of filing: 08.03.2022
(51) Int. Cl.: H04W 28/06, H04W 48/12, H04W 48/18, H04W 84/12

(54) **BASE STATION, TERMINAL, AND COMMUNICATION METHOD**

(30) Priority: 13.05.2021 JP 2021081515
(71) Applicant: Panasonic Intellectual Property Corporation of America, Torrance, CA 90504 (US)
(72) Inventor: IWAI, Takashi, Kadoma-shi, Osaka 571-0057 (JP); TAKATA, Tomofumi, Kadoma-shi, Osaka 571-0057 (JP); URABE, Yoshio, Kadoma-shi, Osaka 571-0057 (JP); MIURA, Taichi, Kadoma-shi, Osaka 571-0057 (JP)
(74) Representative: Grünecker Patent- und Rechtsanwälte PartG mbB
(86) International application number: PCT/JP2022/009953
(87) International publication number: WO 2022/239426

(57) **Abstract**

This base station comprises: a control circuit which generates a control signal for uplink transmission including, in a field common to a plurality of terminals, information pertaining to a version of the wireless communication specification and a subfield that is differently configured according to the version; and a transmission circuit which transmits the control signal.

## Description

### Technical Field

The present disclosure relates to a base station, a terminal, and a communication method.

### Background Art

In the Institute of Electrical and Electronics Engineers (IEEE), studies have been carried out on the IEEE 802.11be standard (hereinafter, also referred to as " 11be") for the next generation radio Local Area Network (LAN), which is the successor to the IEEE 802.11ax standard (hereinafter, also referred to as "11ax"). For example, IEEE 802.11ax is also referred to as High Efficiency (HE), and IEEE 802.11be is also referred to as Extreme High Throughput (EHT).

### Citation List

### Non-Patent Literature

NPL 1
   IEEE P802.11be /D0.4
NPL 2
   IEEE P802. 1 1ax /D8.0
NPL 3
   IEEE 802.11-21/0259r4, "Proposed Draft Specification for Trigger frame for EHT"
NPL 4
   IEEE 802.11-20/1672r2, "UL Beamforming for TB PPDUs in 11be"
NPL 5
   IEEE 802.11-19/0804r0, "Multi-AP Transmission Procedure"
NPL 6
   IEEE 802.11-21/0366r3, "Discussion on HE or EHT variant differentiation of a trigger frame"

### Summary of Invention

However, a method for configuring a format of a control signal controlling uplink transmission in radio communication such as wireless LAN has not been sufficiently studied.

A non-limiting embodiment of the present disclosure facilitates providing a terminal, a base station, and a communication method each capable of appropriately configuring a format of a control signal controlling uplink transmission.

A base station according to an embodiment of the present disclosure includes: control circuitry, which, in operation, generates a control signal for uplink transmission, the control signal including information on a version of a radio communication standard and a subfield whose configuration is varied depending on the version in a field common to a plurality of terminals; and transmission circuitry, which, in operation, transmits the control signal.

Note that these generic or specific aspects may be achieved by a system, an apparatus, a method, an integrated circuit, a computer program, or a recoding medium, and also by any combination of the system, the apparatus, the method, the integrated circuit, the computer program, and the recoding medium.

According to an embodiment of the present disclosure, for example, a format of a control signal controlling uplink transmission can be appropriately configured.

Additional benefits and advantages of the disclosed exemplary embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an exemplary Trigger frame;
FIG. 2 illustrates an exemplary Common Info field;
FIG. 3 illustrates an exemplary User Info field;
FIG. 4 illustrates an exemplary Special User Info field;
FIG. 5 illustrates exemplary Trigger types;
FIG. 6 is a block diagram illustrating a part of an exemplary configuration of an access point (AP);
FIG. 7 is a block diagram illustrating a part of an exemplary configuration of a terminal;
FIG. 8 is a block diagram illustrating an exemplary configuration of an AP;
FIG. 9 illustrates exemplary Trigger types according to Embodiment 1;
FIG. 10 is a block diagram illustrating an exemplary configuration of the terminal;
FIG. 11 is a sequence diagram illustrating an exemplary operation of the AP and the terminal;
FIG. 12 illustrates an exemplary Common info field according to Embodiment 1;
FIG. 13 illustrates another exemplary Common info field according to Embodiment 1;
FIG. 14 illustrates still another exemplary Common info field according to Embodiment 1;
FIG. 15 illustrates still another exemplary Common info field according to Embodiment 1;
FIG. 16 illustrates still another exemplary Common info field according to Embodiment 1;
FIG. 17 illustrates exemplary Trigger types according to Embodiment 2;
FIG. 18 illustrates other exemplary Trigger types according to Embodiment 2;
FIG. 19 illustrates an exemplary Common Info field according to Embodiment 2;
FIG. 20 illustrates an exemplary User Info field according to Embodiment 2;
FIG. 21 illustrates an exemplary Special User Info field according to Embodiment 2;
FIG. 22 illustrates an exemplary User Info field;
FIG. 23 illustrates an exemplary Feedback type subfield according to Embodiment 2;
FIG. 24 illustrates an exemplary User Info field; and
FIG. 25 illustrates an exemplary User Info field.

### Description of Embodiments

Hereinafter, embodiments of the present disclosure will be described in detail with reference to the drawings.

In 11ax (e.g., HE), introduction of an Orthogonal Frequency Division Multiple Access (OFDMA) in the uplink (UL) is specified. For example, an access point (AP or also referred to as a "base station") transmits a control signal (hereinafter, referred to as a "Trigger frame") indicating transmission of uplink signals (e.g., uplink OFDMA signals) to a plurality of terminals (STA: Station or also referred to as a "non-AP STA") covered by the AP.

In 11be (e.g., EHT), it has been agreed to reuse the Trigger frame of 11ax (HE) as a control signal indicating transmission of uplink signals (e.g., uplink OFDMA signals) to a plurality of terminals (e.g., see Non-Patent Literature (hereinafter, referred to as NPL) 1 and NPL 3).

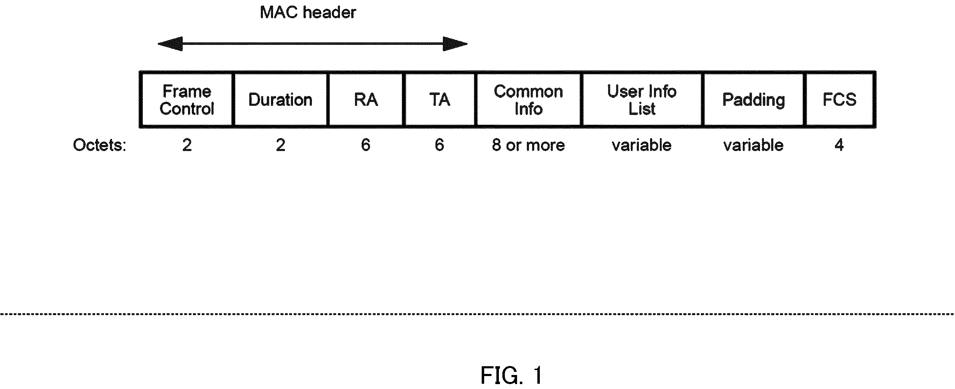

FIG. 1 illustrates an exemplary Trigger frame. As illustrated in FIG. 1, a Trigger frame includes a field (e.g., Common Info field) including information common to a plurality of terminals that is OFDMA-multiplexed and a field called a User Info List (e.g., refer to NPLs 1, 2, and 3). The User Info List may include, for example, one or more fields (e.g., "User Information Field (User Info field)") that include information individual (or unique) to each terminal.

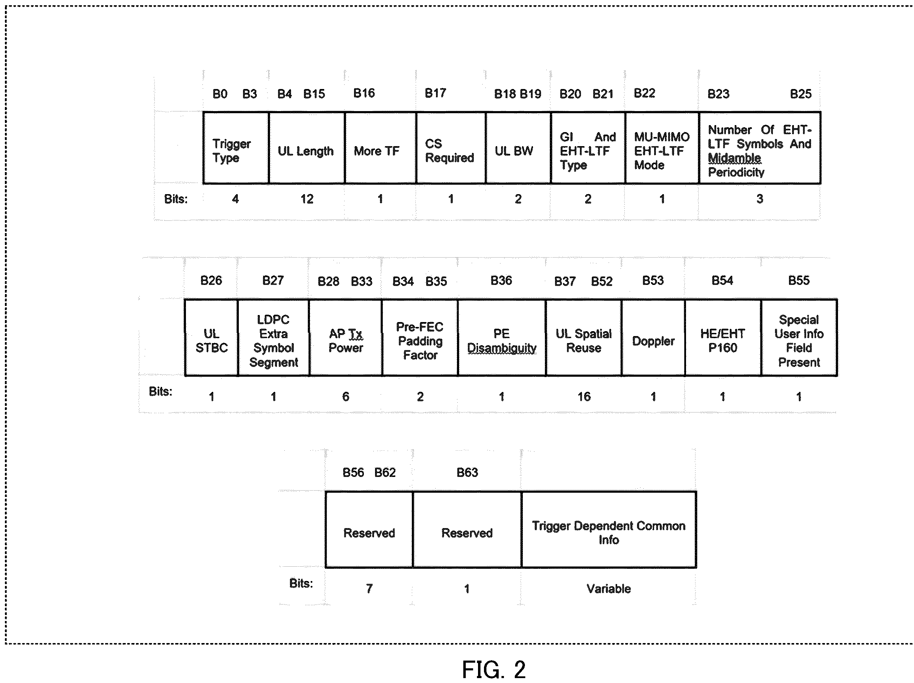

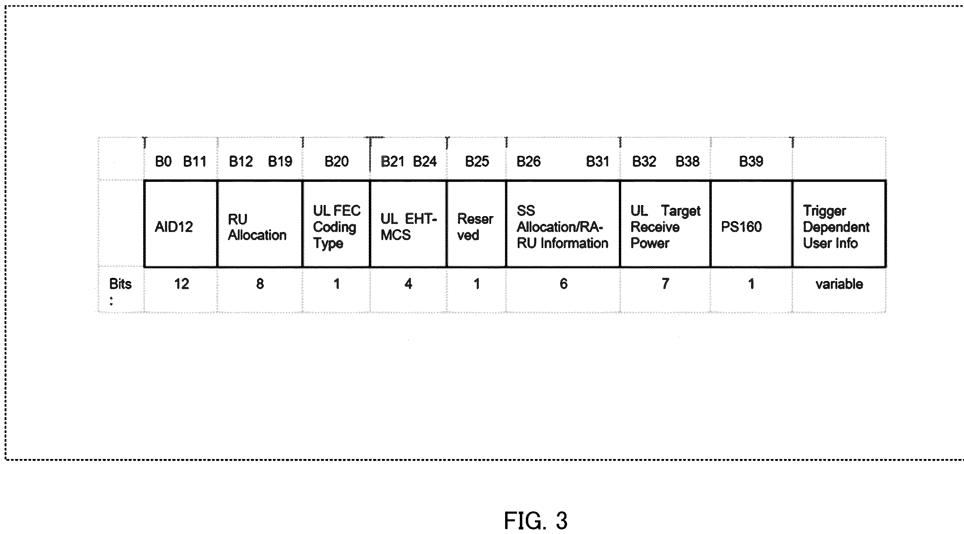

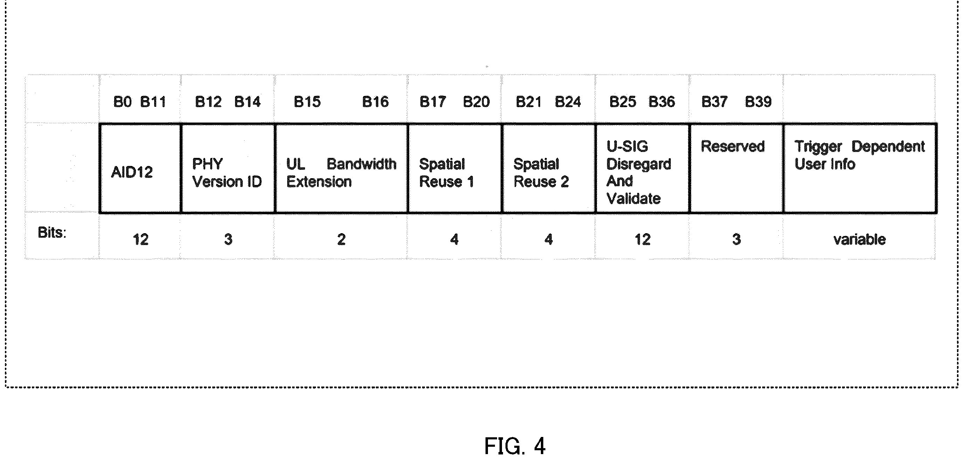

FIG. 2 illustrates an exemplary configuration of a Common Info field (e.g., Common Info field format and EHT variant) discussed for 11be (e.g., EHT). Further, FIG. 3 illustrates an exemplary configuration of a User Info field (e.g., User Info field format and EHT variant) discussed for 11be (EHT) (see, e.g., NPL 3). Furthermore, FIG. 4 illustrates an exemplary configuration of a Special User Info field including information for a terminal compliant with 11be (e.g., EHT) (hereinafter, referred to as an "EHT terminal") (see, e.g., NPL 3).

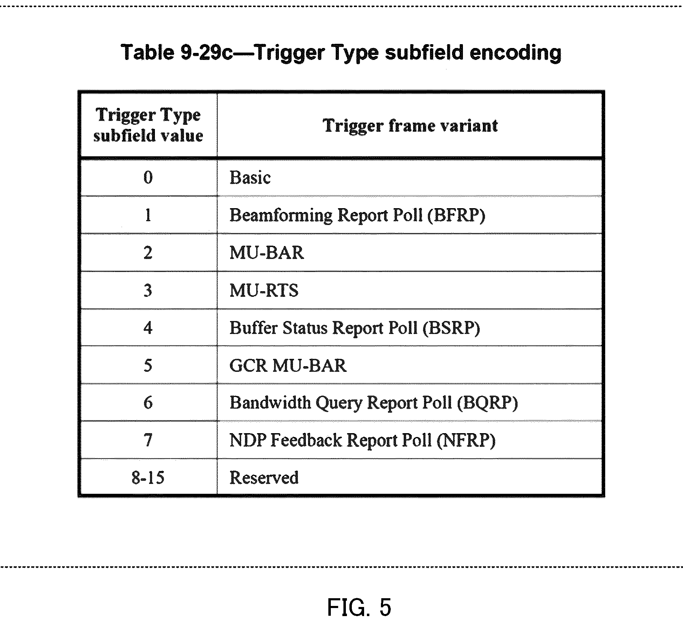

For example, a "Trigger Type" subfield in a Common Info field illustrated in FIG. 2 is a subfield indicating a type of a Trigger frame (e.g., signal type in which an AP causes a terminal to transmit a signal). FIG. 5 illustrates exemplary types defined as Trigger Types in 11ax (e.g., see NPL 2).

Further, for example, a "Trigger Dependent Common Info" subfield in the Common Info field illustrated in FIG. 2 may include information (e.g., common information) that depends on the Trigger type.

In addition, for example, a new Trigger type different from the Trigger types defined in 11ax is possibly introduced in 11be (EHT).

For example, application of uplink beamforming to an uplink response signal for a Trigger frame of an EHT terminal has been discussed (e.g., see NPL 4). For the application of the uplink beamforming, a Trigger type for prompting a terminal to transmit a Null Data packet (NDP) for sounding or a Trigger type including precoding information to be applied to an uplink response signal in a User Info field may be newly introduced in order for an AP to acquire precoding information used by each terminal, for example.

Note that the uplink response signal may also be referred to as an EHT triggerbased physical layer protocol data unit (EHT TB PPDU) or an HE TB PPDU, for example.

Further, in EHT, application of Multi-AP coordination (hereinafter, referred to as "coordinated communication") in which a plurality of APs cooperatively communicates (e.g., at least one of transmission and reception of data) with each terminal has been discussed, for example (e.g., see NPL 5). To realize the coordinated communication, a Trigger type for indicating control information on the coordinated communication to terminals or APs participating in the coordinated transmission may be newly introduced.

For example, when a new Trigger type (e.g., transmission of an NDP for sounding or control of coordinated communication, as described above) is introduced in EHT or a future version (hereinafter, referred to as, e.g., "EHT+"), any of Reserved fields (8 to 15) of Trigger type subfield values in a Common info field illustrated in FIG. 5 is possibly used. For example, a Trigger type for indicating transmission of an NDP for Sounding may be configured when a Trigger type subfield value = 8, and a Trigger type on control of coordinated communication may be configured when Trigger type subfield value = 9. Note that the configuration of Trigger types for Trigger type subfield values is not limited to these cases.

Then, a method for adding a Trigger type that is new to HE to EHT has not been sufficiently discussed. For example, there is scope for further study on a format configuration (e.g., field (or subfield) configuration) of a Trigger frame (e.g., at least one of a Common Info field and a User Info field) when a Trigger type new to HE is added to EHT.

In a non-limiting embodiment of the present disclosure, an exemplary format configuration of a signal will be described.

### (Embodiment 1)

For example, a Trigger type indicated by using a Reserved field (8 to 15) of a Trigger type subfield value in a Common Info field defined in HE is a Trigger type unsupported by a terminal compliant with HE (e.g., referred to as an "HE terminal"). For example, in the HE specification, when an unsupported Trigger type (e.g., Trigger type value corresponding to the Reserved field) is indicated from an AP, the HE terminal may perform an operation to stop processing of receiving the Trigger frame.

For example, when a new Trigger type added to EHT is indicated using a Trigger type subfield in a Common Info field defined in HE, the HE terminal stops processing of receiving the Trigger frame, and an EHT terminal performs processing of receiving the Trigger frame. For example, after receiving the Trigger frame, the EHT terminal may transmit an EHT TB PPDU (format of a TB PPDU compliant with EHT) to the AP.

The Trigger frame herein includes control information for an HE terminal (e.g., control information for transmission of an HE TB PPDU). Thus, as described above, when a new Trigger type for an EHT terminal is indicated, information on one or some of subfields including control information for an HE terminal (e.g., for transmission of an HE TB PPDU) is possibly useless information for the EHT terminal that receives the Trigger frame.

Examples of control information for an HE terminal include a "UL Space Time Block Coding (STBC)" subfield, a "UL Spatial Reuse" subfield, and a "Doppler" subfield in the Common Info field illustrated in FIG. 2. These subfields include information for an HE terminal, and are possibly subfields (Reserved field) that need not be received by the EHT terminal that transmits an EHT TB PPDU in response (see, e.g., NPLs 1 and 3).

As described above, when a new Trigger type for an EHT terminal is indicated using a Reserved field of a Trigger type subfield value in the Common Info field defined in HE, one or some of subfields are useless information for an EHT terminal, and therefore, overhead possibly increases.

In a non-limiting embodiment of the present disclosure, a method for suppressing an increase in overhead in a Trigger frame when a new Trigger type for an EHT terminal is indicated will be described.

### [Configuration of Radio Communication System]

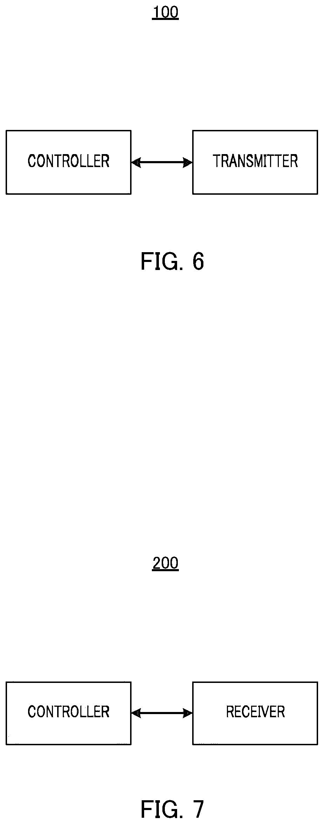

The radio communication system according to the present embodiment may include, for example, AP 100 illustrated in FIG. 6 and terminal 200 illustrated in FIG. 7. There may be two or more APs 100 and two or more terminals 200 in a radio communication system. For example, AP 100 may transmit a Trigger frame indicating uplink OFDMA transmission to terminal 200. Terminal 200 may receive the Trigger frame and transmit an uplink OFDMA signal to AP 100 using a resource indicated by the received Trigger frame.

AP 100 is herein an AP supporting EHT, and may be an AP having a backward compatibility with HE (e.g., AP also supporting HE).

Further, terminal 200 may be either of an HE terminal and an EHT terminal, for example. AP 100 may transmit one Trigger frame to a plurality of terminals 200 whose versions of radio communication standards such as wireless LAN standards are different (e.g., either HE or EHT), and receive an uplink OFDMA signal from each terminal 200. AP 100 may, for example, separate an uplink signal on a resource allocated to each terminal 200 from the reception signal, and decode the uplink signal.

FIG. 6 is a block diagram illustrating an exemplary configuration of a part of AP 100 according to the embodiment of the present disclosure. In AP 100 illustrated in FIG. 6, a controller (e.g., corresponding to control circuitry) generates an uplink transmission control signal (e.g., Trigger frame) including, in a field common to a plurality of terminals (e.g., Common Info field), information on a version of the radio communication standard and a subfield whose configuration is varied depending on the version. A transmitter (e.g., corresponding to transmission circuitry) transmits the control signal.

FIG. 7 is a block diagram illustrating a part of an exemplary configuration of terminal 200 according to the embodiment of the present disclosure. In terminal 200 illustrated in FIG. 7, a receiver (e.g., corresponding to reception circuitry) receives an uplink transmission control signal (e.g., Trigger frame) including, in a field common to a plurality of terminals (e.g., Common Info field), information on a version of the radio communication standard and a subfield whose configuration is varied depending on the version. Further, a controller (e.g., corresponding to control circuitry) determines the configuration based on the information on the version.

### [Exemplary Configuration of AP 100]

For example, AP 100 generates a Trigger frame for indicating transmission of an uplink signal such as a data signal or an NDP signal to terminal 200, and transmits the Trigger frame to terminal 200.

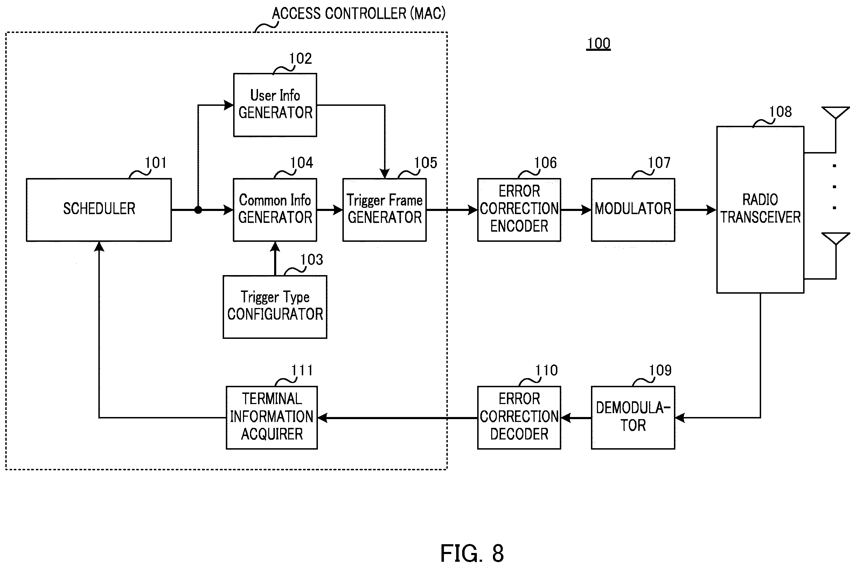

FIG. 8 is a block diagram illustrating an exemplary configuration of AP 100. AP 100 illustrated in FIG. 8 includes scheduler 101, User Info generator 102, Trigger type configurator 103, Common Info generator 104, Trigger frame generator 105, error correction encoder 106, modulator 107, radio transceiver 108, demodulator 109, error correction decoder 110, and terminal information acquirer 111.

For example, scheduler 101, User Info generator 102, Trigger type configurator 103, Common Info generator 104, Trigger frame generator 105, and terminal information acquirer 111 may be included in an access controller (e.g., Medium Access Control (MAC) processor).

Further, at least one of scheduler 101, User Info generator 102, Trigger type configurator 103, Common Info generator 104, Trigger frame generator 105, error correction encoder 106, modulator 107, demodulator 109, error correction decoder 110, and terminal information acquirer 111 illustrated in FIG. 8 may be included in the controller illustrated in FIG. 6. Further, radio transceiver 108 illustrated in FIG. 8 may be included in the transmitter illustrated in FIG. 6, for example.

Scheduler 101 may perform scheduling for terminal 200, for example. For example, scheduler 101 may determine a Trigger type corresponding to a type of an uplink response signal and information on a radio resource of the uplink response signal, based on a version (e.g., HE or EHT) with which terminal 200 is compliant or control information such as radio quality information individual for each band. The version and the control information are included in terminal information inputted from terminal information acquirer 111. The information on a radio resource of the uplink response signal may include, for example, an allocation band, a modulation scheme and coding rate (MCS: Modulation and Codding Scheme), and a target reception level. For example, scheduler 101 outputs information on the determined Trigger type and radio resource information on each terminal 200 to User Info generator 102 and Common Info generator 104.

User Info generator 102 may generate control information included in a User Info field individual for each terminal 200 (or STA), for example. User Info generator 102 may, for example, generate information on a User Info field individual for each terminal 200 based on the specified format, and generate information on a User Info List including respective User Info fields for a plurality of terminals 200. User Info generator 102 may, for example, output the information on the User Info List to Trigger frame generator 105.

For example, Trigger type configurator 103 may configure an association between a Trigger type corresponding to a type of the uplink response signal and information (e.g., Trigger type subfield value) indicating a Trigger type in a Trigger frame, and hold the configured information on the Trigger type. Trigger type configurator 103 may output the configured information on the Trigger type to Common Info generator 104.

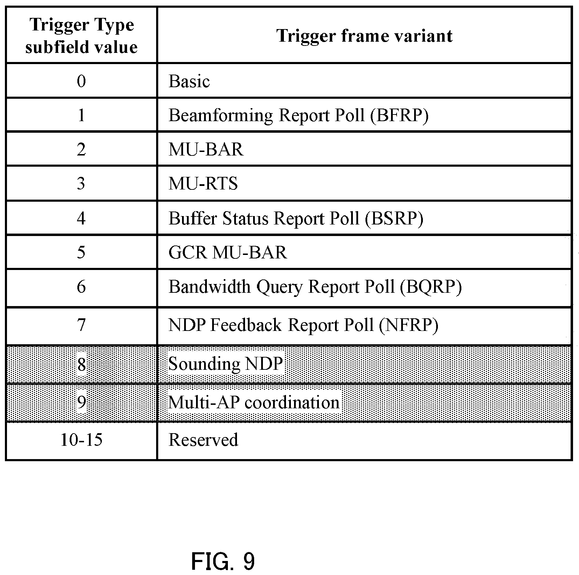

The association between Trigger types and information indicating Trigger types in a Trigger frame may be, for example, information in a table format (e.g., referred to as a "Trigger type table"), or information in a format other than the table format. FIG. 9 illustrates an exemplary Trigger type table held by Trigger type configurator 103. For example, a Trigger type table illustrated in FIG. 9 may include a Trigger type (e.g., any of Trigger type subfield value = 0 to 7) defined in HE as illustrated in FIG. 5 and a Trigger type for an EHT terminal (e.g., Trigger type subfield value = 8 or 9) unsupported by an HE terminal, such as a Sounding NDP and Multi-AP coordination.

Common Info generator 104 may generate control information included in a Common Info field common to a plurality of terminals 200, for example. For example, Common Info generator 104 may generate information on a Trigger type subfield based on information on the indication of the Trigger type inputted from scheduler 101 and information (e.g., Trigger type table) on Trigger types inputted from Trigger type configurator 103.

The Trigger type (e.g., also referred to as a Trigger frame variant) indicated in the Trigger type subfield may be uniquely associated with information (e.g., referred to as version information) on a version (or also referred to as "generation") of a wireless LAN standard (also referred to as a communication standard), such as an HE or EHT-compliant version, for example. For example, Common Info generator 104 may generate a Common Info field including a Trigger type subfield, based on a format (e.g., field configuration) corresponding to the version information associated with the Trigger type, and output information on the generated Common Info field to Trigger frame generator 105.

For example, when Common Info generator 104 indicates a Trigger type compliant with HE (EHT terminal may also support the Trigger type), Common info generator 104 may generate a Common Info field based on the format illustrated in FIG. 2. Further, for example, when Common Info generator 104 indicates a Trigger type compliant with EHT (e.g., unsupported by an HE terminal), Common Info generator 104 may generate a Common Info field, making the configuration of a subfield receivable by an EHT terminal (e.g., one or some of subfields illustrated in FIG. 2) different from that in the HE-compliant case. Note that an exemplary configuration of a Common Info field will be described later.

Note that the term "configuration" of a field (e.g., subfield) in a Trigger frame may be replaced with another term such as "defined" or "interpreted."

Trigger frame generator 105 may generate a Trigger frame including the information on the Common Info field inputted from Common Info generator 104 and the information on the User Info List (e.g., a plurality of User Info fields) inputted from User Info generator 102, based on the format illustrated in FIG. 1. The Trigger frame may include, for example, at least one of a MAC header, Padding, and an FCS (frame check sequence) in addition to the Common Info field and the User Info List. Trigger frame generator 105 may, for example, output the generated Trigger frame to error correction encoder 106.

Error correction encoder 106, for example, performs error correction encoding on a transmission data signal including the Trigger frame inputted from Trigger frame generator 105, and outputs the encoded signal to modulator 107.

Modulator 107, for example, performs modulation processing on the signal inputted from error correction encoder 106, and outputs the modulated signal to radio transceiver 108.

Note that, when the data signal after the modulation is an Orthogonal Frequency Division Multiplexing (OFDM) signal, AP 100 (e.g., modulator 107) may map the modulated signal to a specified frequency resource, perform an Inverse Fast Fourier Transform (IFFT) processing to convert the signal into a temporal waveform, and add a cyclic prefix (CP) to form an OFDM signal.

Radio transceiver 108, for example, performs radio transmission processing such as D/A conversion and up-conversion to a carrier frequency on the signal inputted from modulator 107, and transmits the signal after the radio transmission processing to terminal 200 via an antenna. Further, radio transceiver 108 receives a signal transmitted from terminal 200 via the antenna, performs radio reception processing such as down-conversion to a baseband and A/D conversion on the received signal, and outputs the signal after the radio reception processing to demodulator 109.

Demodulator 109, for example, performs demodulation processing on the signal inputted from radio transceiver 108, and outputs the signal after the demodulation to error correction decoder 110. Note that, when the signal inputted to demodulator 109 is an OFDM signal, AP 100 (e.g., demodulator 109) may perform CP removal processing and Fast Fourier Transform (FFT) processing.

Error correction decoder 110, for example, decodes the signal inputted from demodulator 109 and acquires a received data signal from terminal 200. For example, when the received data after the decoding includes the above-described terminal information, error correction decoder 110 outputs the decoded data including the terminal information to terminal information acquirer 111.

Terminal information acquirer 111 may, for example, acquire the terminal information (e.g., may include version information of terminal 200 and radio quality information individual for a specified band) from the decoded data inputted from error correction decoder 110, and output the acquired terminal information to scheduler 101. Note that the term "terminal information" means information on terminal 200, for example, and may be replaced with the term "Capability information."

### [Exemplary Configuration of Terminal 200]

For example, terminal 200 receives a Trigger frame indicating transmission of an uplink signal such as a data signal or an NDP signal from AP 100, and transmits a response signal for the Trigger frame to AP 100.

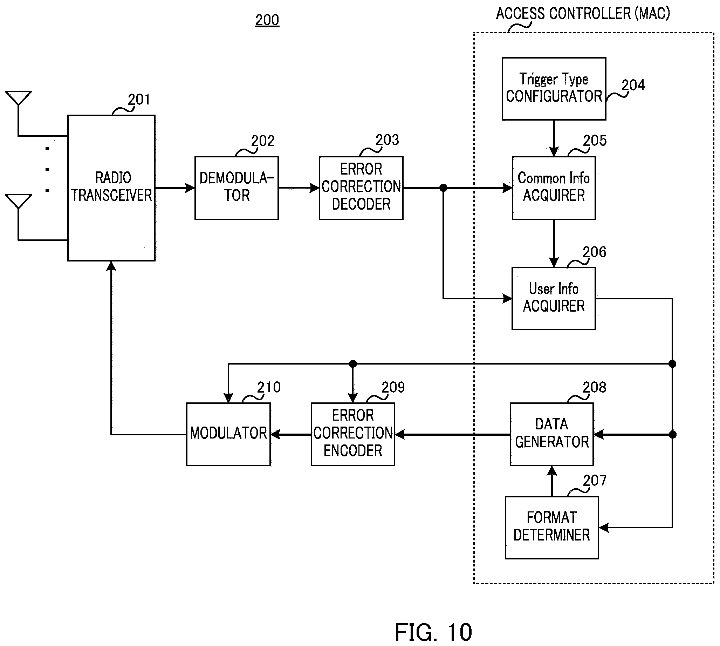

FIG. 10 is a block diagram illustrating an exemplary configuration of terminal 200. Terminal 200 illustrated in FIG. 10 may include radio transceiver 201, demodulator 202, error correction decoder 203, Trigger type configurator 204, Common Info acquirer 205, User Info acquirer 206, format determiner 207, data generator 208, error correction encoder 209, and modulator 210, for example.

For example, Trigger type configurator 204, Common Info acquirer 205, User Info acquirer 206, format determiner 207, and data generator 208 may be included in an access controller (e.g., MAC processor).

Further, at least one of demodulator 202, error correction decoder 203, Trigger type configurator 204, Common Info acquirer 205, User Info acquirer 206, format determiner 207, data generator 208, error correction encoder 209, and modulator 210 illustrated in FIG. 10 may be included in the controller illustrated in FIG. 7, for example. Further, radio transceiver 201 illustrated in FIG. 10 may be included in the receiver illustrated in FIG. 7, for example.

Radio transceiver 201 receives a reception signal via an antenna, performs radio reception processing such as down-conversion and A/D conversion on the received signal, and outputs the signal after the radio reception processing to demodulator 202, for example. Further, radio transceiver 201, for example, performs radio transmission processing such as up-conversion and D/A conversion on the signal inputted from modulator 210, and transmits the signal after the radio transmission processing via the antenna.

For example, demodulator 202 performs demodulation processing on the reception data inputted from radio transceiver 201, and outputs the demodulated signal to error correction decoder 203. Note that, when the signal inputted to demodulator 202 is an OFDM signal, terminal 200 (e.g., demodulator 202) may perform CP removal processing and Fast Fourier Transform (FFT) processing.

Error correction decoder 203 may decode the demodulated signal inputted from demodulator 202, and output the decoded signal as a received data signal, for example. Further, error correction decoder 203 outputs a Trigger frame in the received data signal to Common Info acquirer 205 and User Info acquirer 206, for example.

For example, Trigger type configurator 204 may perform the same operation as Trigger type configurator 103 of AP 100. For example, Trigger type configurator 204 may output information (e.g., Trigger type table) on predefined Trigger types to Common Info acquirer 205.

Common Info acquirer 205 may, for example, extract information corresponding to a Common Info field from the Trigger frame inputted from error correction decoder 203 based on the information (e.g., Trigger type table) inputted from Trigger type configurator 204, and acquire terminal-common information on generation of an uplink signal. The terminal-common information may include, for example, a type of an uplink response signal (e.g., data) and a time length of the uplink signal.

For example, in a case where terminal 200 is an HE terminal, when a Trigger type subfield value included in a Trigger type subfield is a value unsupported by the HE terminal, terminal 200 may determine that the version is a version not compliant with HE (or a version compliant with EHT), and stop the reception processing. On the other hand, when the Trigger type subfield value included in the Trigger type subfield is a value supported by the HE terminal, terminal 200 may determine that the version is a version compliant with HE, and perform processing of receiving a Common Info field based on the format specified for the HE terminal (e.g., format illustrated in FIG. 2).

For example, the HE terminal supporting the Trigger type table illustrated in FIG. 5 may stop the reception processing when receiving a value of Trigger type subfield value = 8 or more, and perform processing of receiving a Common Info field when receiving a value of Trigger type subfield value = 7 or less.

Further, for example, when terminal 200 is an EHT terminal, terminal 200 may change the configuration of the format of the Trigger frame (e.g., Common Info field) depending on the Trigger type indicated by the Trigger type subfield, similarly to the operation of AP 100. For example, when the Trigger type is a type compliant with HE, terminal 200 may perform processing of receiving a Common Info field based on the format definition illustrated in FIG. 2. On the other hand, for example, when the Trigger type is a type compliant with EHT (in other words, when the Trigger type is not compliant with HE), terminal 200 may perform processing of receiving a Common Info field based on a format obtained by changing the configuration of one or some of subfields in the format illustrated in FIG. 2. Note that, when terminal 200 is an EHT terminal, a Special User Info field may be included in the User Info List.

Common Info acquirer 205 may output the extracted terminal-common information to User Info acquirer 206.

For example, User Info acquirer 206 may extract information corresponding to a User Info field from the Trigger frame inputted from error correction decoder 203, and acquire terminal-specific information on generation of an uplink signal. For example, User Info acquirer 206 may extract a User info List (e.g., a plurality of User Info fields and a Special User Info field) from the Trigger frame inputted from error correction decoder 203, and perform processing of receiving the User info field based on the terminal-common information (e.g., including a Trigger type) inputted from Common Info acquirer 205. For example, when determining that there is an allocation indication addressed to terminal 200, User Info acquirer 206 may acquire information on a Trigger type or data generation from User info field. User Info acquirer 206 may, for example, output the terminal-specific information and the terminal-common information to format determiner 207, data generator 208, error correction encoder 209, and modulator 210.

Note that, when terminal 200 is an HE terminal, User Info acquirer 206 may perform processing of receiving a User info field based on the format for an HE terminal, for example. Further, when terminal 200 is an EHT terminal, User Info acquirer 206 may perform processing of receiving a User info field based on the format for an EHT terminal, for example.

Format determiner 207 may determine a format of the uplink response signal (e.g., format corresponding to an EHT TB PPDU or HE TB PPDU) based on the information (e.g., including a Trigger type) inputted from User Info acquirer 206. Format determiner 207 may output information on the determined format (e.g., TB PPDU format) to data generator 208.

Data generator 208 generates a data signal of a specified type and size based on the information on the TB PPDU format inputted from format determiner 207 and the terminal-common information and terminal-specific information inputted from User info acquirer 206, and then outputs the data signal to error correction encoder 209.

Error correction encoder 209, for example, performs error correction encoding on the data signal inputted from data generator 208 based on the information (e.g., terminal-common information and terminal-specific information) inputted from User Info acquirer 206, and outputs the encoded signal to modulator 210.

Modulator 210 modulates the signal inputted from error correction encoder 209, and outputs the modulated signal to radio transceiver 201 based on the information (e.g., terminal-common information and terminal-specific information) inputted from User Info acquirer 206. Note that, in a case where the modulated signal is an OFDM signal, terminal 200 (e.g., modulator 210) may form the OFDM signal by performing IFFT processing after mapping the modulated signal on a frequency resource, and adding a CP.

### [Exemplary operation of AP 100 and Terminal 200]

Next, an exemplary operation of AP 100 and terminal 200 according to the present embodiment will be described.

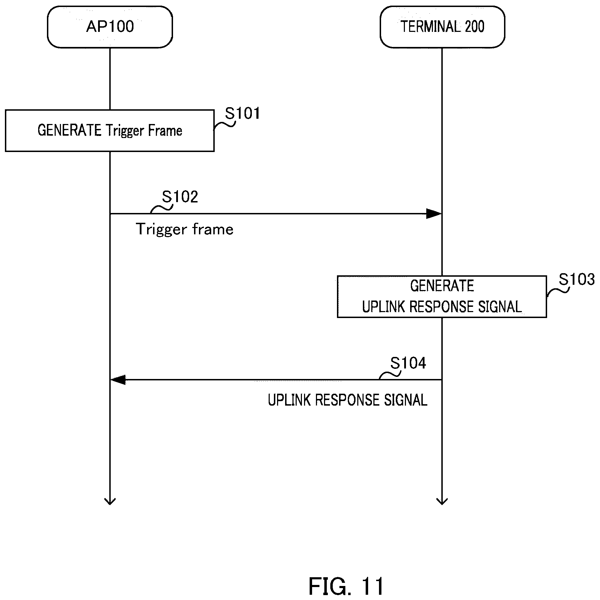

FIG. 11 is a flow chart illustrating an exemplary operation of AP 100 and terminal 200 according to the present embodiment.

In FIG. 11, AP 100, for example, generates a Trigger frame for at least one terminal 200 (S101). AP 100 may generate a Trigger frame including version information (either HE or EHT version) with which terminal 200 is compliant and a subfield whose configuration is varied depending on the version with which terminal 200 is compliant, in a Common Info field. For example, when the version with which terminal 200 is compliant is EHT, AP 100 may determine a format different from a format of a Common Info field defined in HE. In other words, when the version with which terminal 200 is compliant is EHT, AP 100 may change the format of the Common Info field defined in HE, for example. Further, for example, AP 100 may generate a Trigger type including the version information by associating the version information and the Trigger type with each other.

For example, AP 100 transmits the generated Trigger frame to terminal 200, and terminal 200 receives the Trigger frame from AP 100 (S102). The Trigger frame may include, for example, a Trigger type subfield value associated with the version information and a subfield whose configuration is varied depending on the version.

For example, terminal 200 generates an uplink response signal based on the received Trigger frame (S103). For example, terminal 200 may identify the configuration of the subfield in the Common Info field included in the Trigger frame based on the version information (e.g., either HE or EHT version) associated with the Trigger type subfield value included in the Trigger frame. For example, when the version with which terminal 200 is compliant is EHT, terminal 200 may determine a format different from the format of the Common Info field defined in HE. In other words, when the version with which terminal 200 is compliant is EHT, terminal 200 may change an interpretation of at least one subfield of the Common Info field defined in HE, for example.

Terminal 200 transmits the generated uplink response signal to AP 100 (S104). AP 100 receives the uplink response signal for the Trigger frame based on the Trigger type of the Trigger frame (e.g., version information associated with the Trigger type), for example.

### [Exemplary Operation regarding Common Info field]

Generation of information on a Common Info field in AP 100 will be exemplarily described. For example, an exemplary method for determining an EHT format to be applied to a Common Info field depending on version information in AP 100 will be described.

### <Exemplary Indication of Version Information>

The version information may be indicated with a value of a Trigger type subfield (Trigger type subfield value). In other words, the version information may be associated with a Trigger frame type (Trigger type).

For example, AP 100 and terminal 200 may configure a Trigger type table illustrated in FIG. 9. In FIG. 9, each of Trigger type subfield value = 0 to 7 is a Trigger type defined in HE (e.g., FIG. 5). Further, in FIG. 9, each of Trigger type subfield value = 8 to 9 is a Trigger type defined in EHT (in other words, Trigger type undefined in HE).

For example, in FIG. 9, when a Trigger type subfield value is 7 (e.g., threshold value) or less (0 to 7), the associated version is HE, and when the Trigger type subfield value is more than 7 (e.g., 8 to 9), the associated version is EHT.

Association between the Trigger type and the version information as described above enables indication of the version information with a value on the Trigger type included in the Trigger frame.

### <Exemplary Determination of Format of Common Info field>

AP 100 may determine a format (e.g., field configuration) of a Common Info field based on version information associated with a Trigger type.

For example, when AP 100 indicates a Trigger type compliant with HE, AP 100 may determine a format of a Common Info field illustrated in FIG. 2.

On the other hand, for example, when AP 100 indicates a Trigger type compliant with EHT, AP 100 may determine a format in which a configuration of one or some of subfields is different from that in the format of the Common Info field illustrated in FIG. 2. For example, in the one or some of subfields, information on control information for an EHT terminal may be configured. AP 100 may vary the configuration of one or some of subfields between an HE-compliant case and an EHT-compliant case.

One or some of subfields may be, for example, subfields to which an EHT terminal does not refer or subfields on control information for an HE terminal. For example, the format of the Common info field compliant with EHT may be a format obtained by changing the interpretation of a subfield that is in the Common Info field defined in HE and not referred by an EHT terminal to information for an EHT terminal. The subfield not referred by an EHT terminal may include at least one of a UL STBC subfield, a UL Spatial Reuse subfield, and a Doppler subfield, for example.

Hereinafter, in a Common info field compliant with EHT, a subfield whose configuration is different from that in the Common Info field compliant with HE will be referred to as the "second Trigger dependent Common Info field (Trigger dependent Common Info 2)," for example.

As described above, when the version is EHT, AP 100 may configure one or some of subfields in the Common Info field as subfields (e.g., the second Trigger dependent Common Info field) that depend on the Trigger type. This can reduce a field not referred by an EHT terminal in the Trigger frame when the Trigger type compliant with EHT is indicated, thereby reducing overhead of the Trigger frame.

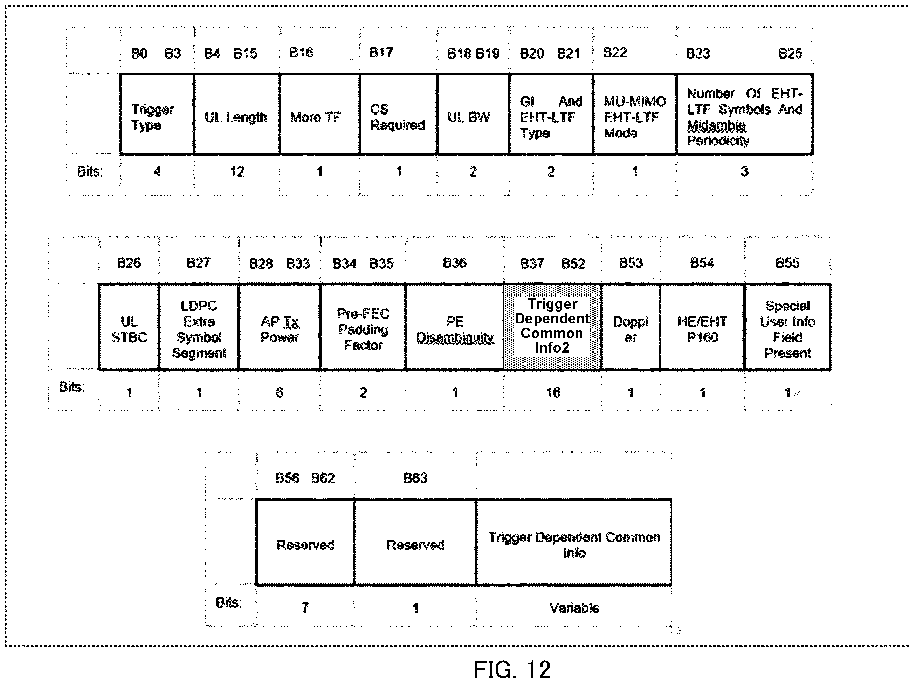

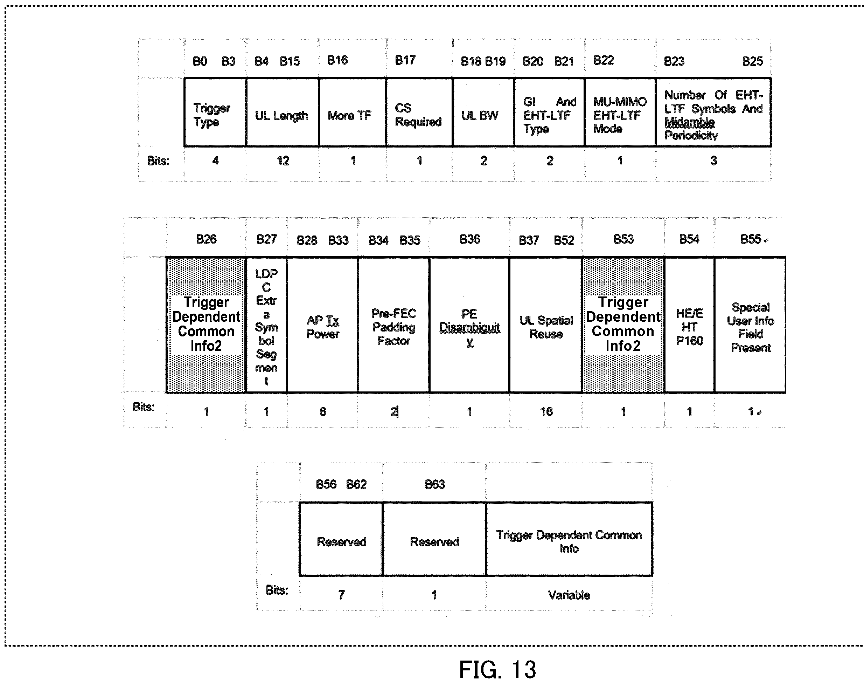

FIGS. 12 and 13 each illustrate an exemplary Common Info field applied when the Trigger type is compliant with EHT (in other words, when not compliant with HE).

Compared to the Common Info field (e.g., FIG. 2) applied when the Trigger type is compliant with HE, in the example illustrated in FIG. 12, a UL Spatial Reuse subfield (subfield corresponding to B37 to B52) is changed to Trigger dependent Common Info 2, and in the example illustrated in FIG. 13, a UL STBC subfield (subfield corresponding to B26) and a Doppler subfield (subfield corresponding to B53) are changed to Trigger dependent Common Info 2.

In the example illustrated in FIG. 12, AP 100 and terminal 200 can use 16 bits as the second Trigger dependent Common Info field, which is advantageous that the information amount that can be indicated to an EHT terminal can be increased compared to the example (e.g., 2 bits) illustrated in FIG. 13.

Further, since a UL Spatial Reuse subfield possibly includes information for Spatial Reuse for an HE terminal of an Overlapped BSS (OBSS), for example, there is possibly a case where a UL Spatial Reuse subfield is not available for Trigger dependent Common Info 2. In this case, for example, as illustrated in FIG. 13, two bits of a UL STBC subfield and a Doppler subfield may be used as the second Trigger dependent Common Info field. This is advantageous that the information amount that can be indicated to an EHT terminal can be increased without affecting Spatial Reuse for an HE terminal of an OBSS.

For a Trigger Dependent Common Info subfield or a User Info field later than the Common info field in the Trigger frame, at least one of the field size and the bit position of each information possibly varies depending on the Trigger type. Terminal 200, for example, identifies a Trigger type, determine the bit positions of the Trigger Dependent Common Info field and the User Info field, and then performs reception processing.

On the other hand, a Common Info field that is configured as the second Trigger dependent Common Info field , such as a UL STBC subfield, a UL Spatial Reuse subfield, or a Doppler subfield illustrated in FIGS. 12 and 13, may be a subfield whose size or bit position does not depend on the Trigger type to be transmitted.

In the present embodiment, a configuration (or definition) of at least one or some of subfields transmitted independently of a Trigger type (or version information) (in other words, subfields different from a subfield that depends on a Trigger type) in a Common info field may be varied depending on the version information, for example. For example, AP 100 and terminal 200 may replace one or some pieces of information whose bit position is specified independently of a Trigger type (or version information), based on the Trigger type (or version information).

Accordingly, as illustrated in FIGS. 12 and 13, even when a configuration of a subfield is replaced depending on the Trigger type (or version information), the bit position of the subfield extracted by terminal 200 does not change, for example, so that the reception processing (e.g., the information extraction processing) of terminal 200 can be simplified.

Further, when Trigger dependent Common Info 2 is applied to the EHT-compliant case, terminal 200 may use both two subfields of Trigger dependent Common Info that is also included in the HE-compliant case and Trigger dependent Common Info 2 configured for the EHT-compliant case as common information that depends on the Trigger type. This can increase an information amount (in other words, indication amount) that can be indicated to terminal 200 by the common information that depends on the Trigger type without increasing Overhead.

Further, for example, in HE, there is possibly a Trigger type in which the size of the Trigger dependent Common Info subfield is 0. Examples of the Trigger type in which the size of the Trigger dependent Common Info is 0 include, for example, Beamforming Report Poll (BFRP), Multi-User Block ACK Request (MU-BAR), Multi-User Request to Send (MU-RTS), Buffer Status Report Poll (BSRP), Bandwidth Query Report Poll (BQRP), and NDP Feedback report Poll (NFRP).

In FIGS. 12 and 13, even when the Trigger type is a type in which the size of the Trigger dependent Common Info is 0, information for an EHT terminal can be transmitted in Trigger dependent Common Info 2 (e.g., subfield whose size and bit position is unchanged) for the EHT terminal.

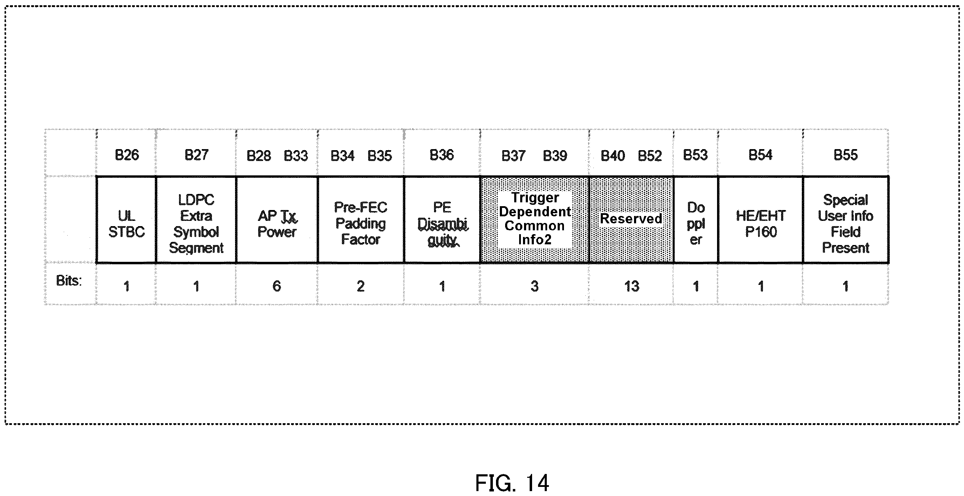

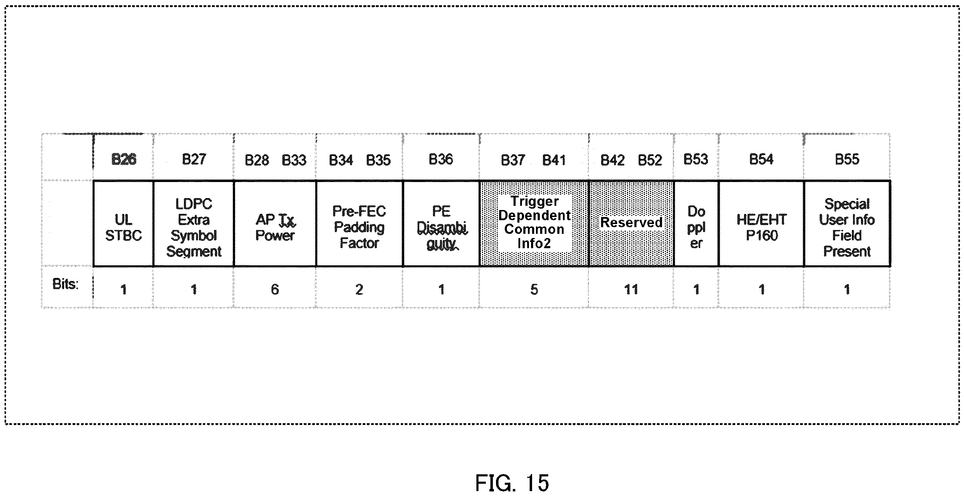

Further, a bit position of a subfield (e.g., Trigger dependent Common Info 2) replaced for the EHT-compliant case may be varied depending on the Trigger type. For example, as illustrated in FIG. 14, when a Trigger Type subfield value is 8, Trigger dependent Common Info 2 may be configured in B37 to B39, and a Reserved field may be configured in B40 to B52, in a UL Spatial Reuse subfield that needs not be received by an EHT terminal. Further, for example, as illustrated in FIG. 15, when a Trigger Type subfield value is 9, Trigger dependent Common Info 2 may be configured in B37 to B41, and a Reserved field may be configured in B42 to B52, in a UL Spatial Reuse subfield that needs not be received by an EHT terminal. As described above, in a subfield in the HE definition not referred by an EHT terminal, Tigger dependent Common Info 2 is configured in one or some of bits, and a Reserved field is configured in the remaining bits, so that a Reserved field can be left, and thus the scalability for future versions can be enhanced.

Note that, in FIGS. 14 and 15, the bit position and the size at which Trigger Dependent Common Info 2 is configured are exemplary, and at least one of the bit position and the size may be different from those in FIGS. 14 and 15. Further, in FIGS. 14 and 15, the UL Spatial Reuse subfield is exemplarily configured as two areas of Trigger Dependent Common Info 2 and a Reserved field, but the number of areas to be configured is not limited to two, and may be three or more.

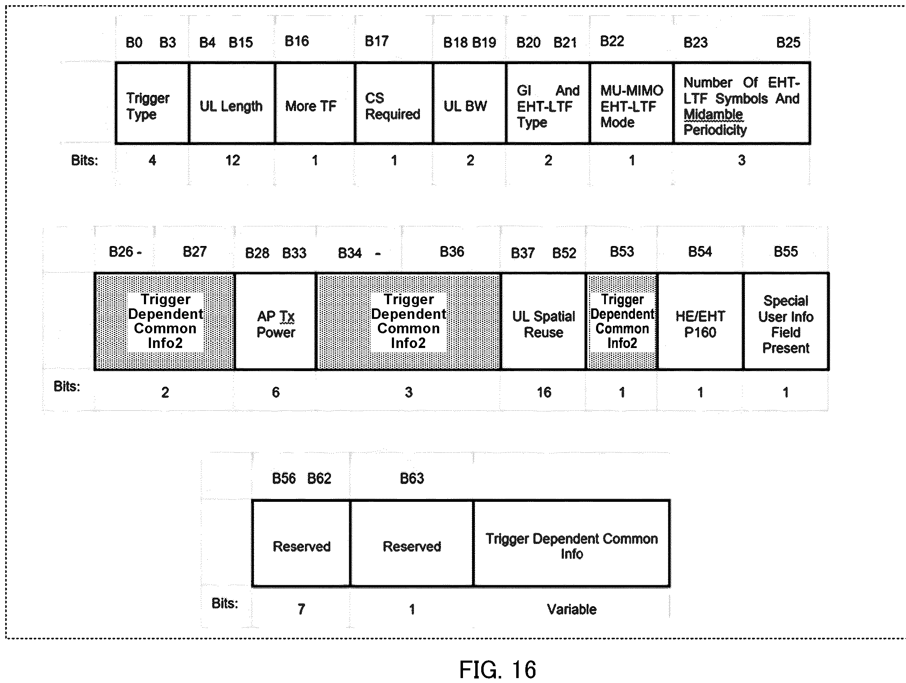

In addition, when a Trigger type compliant with EHT is an NDP for sounding (e.g., a Trigger type indicating a response signal that is not data-generated), a definition (interpretation) of at least one of subfields including information for data generation that is not used for NDP generation may be changed from the definition in HE. FIG. 16 illustrates an example in which a UL STBC subfield, an LDPC Extra Symbol Segment subfield, a Pre-FEC Padding Factor subfield, a PE Disambiguity subfield, a UL SpatialReuse subfield, and a Doppler subfield illustrated in FIG. 2 are configured as Trigger Dependent Common Info 2. Subfields configured as Trigger Dependent Common Info 2 are not limited to those illustrated in FIG. 16.

### <Exemplary Second Trigger dependent Common Info field>

For example, when an EHT-compliant (or HE-unsupported) Trigger type is an NDP for Sounding, Trigger dependent Common Info 2 may include extended information (e.g., number of streams) on the number of symbols of an EHT-long Training field (LTF) of a response signal (TB PPDU). Increasing the number of symbols by indicating Trigger Dependent Common Info 2 can enhance the accuracy of channel estimation.

Alternatively, Trigger dependent Common Info 2 may include information on a Tone mapping interval of an EHT-LTF. Thus, the EHT-LTF can be frequency-multiplexed by Distributed-FDMA between a plurality of APs 100, for example.

Alternatively, Trigger dependent Common Info 2 may include an EHT-LTF stream number used by each terminal 200 in Trigger dependent User Info of a User Info field for reception, or a Tone position in the Tone mapping interval.

Further, for example, when an EHT-compliant Trigger type is Multi-AP coordination, Trigger dependent Common Info 2 may include the following information on a type of coordinated transmission. This allows terminal 200 to transmit information corresponding to the type of coordinated transmission, and allows AP 100 to enhance the efficiency of coordinated communication control, for example.
- Coordinated Spatial Reuse
- Coordinated Orthogonal Frequency Division Multiple Access
- Joint Transmissions
- Coordinated Beamforming

Further, when the Trigger type is Multi-AP coordination, AP 100 and terminal 200 may determine that the version is compliant with EHT, and replace a field that is a User Info field (e.g., AP Info field) in HE with a field including information for EHT. For example, an AP Info field may include an indication to transmit control information used for coordinated transmission from an AP (e.g., also referred to as a sharing AP) that schedules the coordinated transmission to an AP (e.g., also referred to as a shared AP) that participates in the coordinated transmission.

### <Exemplary Operation for Format Determination>

A method for determining a TB PPDU format (e.g., either EHT TB PPDU format or HE TB PPDU format) corresponding to version information in format determiner 207 of terminal 200 will be described.

For example, when the Trigger type is a type compliant with HE, format determiner 207 may determine a TB PPDU format in accordance with information indicated in at least one of a Common Info field and a User Info field (e.g., including a Special User Info subfield).

For example, format determiner 207 may determine the format based on the presence or absence of a Special User Info subfield indicated in a Common Info field. For example, format determiner 207 may apply an EHT TB PPDU when indicated that a Special User Info subfield is present, and apply an HE TB PPDU when indicated that no Special User Info subfield is present.

Alternatively, format determiner 207 may determine the format based on information on allocation of a transmission band for a TB PPDU, for example. For example, when the allocation to Secondary 160 MHz is indicated, format determiner 207 may apply an EHT TB PPDU.

Further, for example, when the Trigger type is a type compliant with EHT, format determiner 207 may apply an EHT TB PPDU regardless of information in the Common Info field and the User Info field.

The exemplary operation for determining a format has been described.

As described above, in the present embodiment, AP 100 generates a Trigger frame including information on a version of a radio communication standard such as HE or EHT and a subfield whose configuration is varied depending on the version, in a Common Info field, and transmits the Trigger frame to terminal 200. Further, terminal 200 determines the configuration of the subfield in the Common Info field of the Trigger frame based on the information on the version of the radio communication standard such as HE or EHT included in the Trigger frame, for example.

According to the present embodiment, for example, even when a new Trigger type new to HE is added for EHT or a future version, a format of a Trigger frame can be appropriately configured (or changed) corresponding to the version, and thus an increase in overhead in the Trigger frame can be suppressed.

### (Embodiment 2)

For example, in EHT, it has been discussed to indicate, with one trigger frame, an Aggregated-PPDU (A-PPDU) that multiplexes an uplink response signal (HE TB PPDU) of an HE terminal and an uplink response signal (EHT TB PPDU) of an EHT terminal (e.g., see PTL 6).

For example, multiplexing for the A-PPDU may be performed in a 320 MHz band. For example, an AP can indicate an A-PPDU with one Trigger frame by allocating frequency bands based on respective formats recognized by an HE terminal and an EHT terminal. As an example, Primary 160 MHz may be allocated to an HE terminal that supports a bandwidth up to 160 MHz, and Secondary 160 MHz may be allocated to an EHT terminal that supports a bandwidth up to 320 MHz. Note that the frequency bandwidth to which an A-PPDU is applied is not limited to 320 MHz, and may be another bandwidth.

In Embodiment 1, when a Trigger type that is possibly added to EHT (Trigger type unsupported by an HE terminal) is indicated in a Trigger type subfield in a Common Info field, an HE terminal stops processing of receiving a Trigger frame. Therefore, when a Trigger type that is unsupported by an HE terminal is indicated in the Trigger type subfield in the Common Info field, there is a possibility that an A-PPDU cannot be indicated with one Trigger frame.

In the present embodiment, a method will be described in which application of an A-PPDU to response signals of an HE terminal and an EHT terminal can be realized in a Trigger frame indicating a new Trigger type for an EHT terminal (in other words, a Trigger type unsupported in HE).

### [Configuration of Base Station]

An exemplary configuration of AP 100 according to the present embodiment may be the same as that in FIG. 8. For example, in AP 100 according to the present embodiment, operations of Trigger type configurator 103 and Common Info generator 104 may be different from those in Embodiment 1.

For example, Trigger type configurator 103 may configure an association between a Trigger type corresponding to a type of an uplink response signal and information (e.g., Trigger type subfield value) indicating a Trigger type in a Trigger frame, and hold the configured information on the Trigger type (e.g., information in a table format).

In the present embodiment, Trigger type configurator 103 may, for example, configure a predefined Trigger type table for an HE terminal (e.g., FIG. 5) and a Trigger type table that is for an EHT terminal and different from that for an HE terminal. (The example will be described later.) The Trigger type table for an EHT terminal herein may include a new Trigger type unsupported by an HE terminal. Trigger type configurator 103, for example, outputs information on the configured Trigger tables to Common Info generator 104.

Common Info generator 104, for example, generates a Trigger type subfield indicating a Trigger type for an HE terminal and a subfield (e.g., referred to as "Trigger type 2 subfield") indicating a Trigger type for an EHT terminal, based on the indication of the Trigger type inputted from scheduler 101 and the Trigger type tables inputted from Trigger type configurator 103. In other words, Common Info generator 104 may configure information on a type of a Trigger frame (e.g., Trigger type subfield value) in a Common Info field of a Trigger frame using a plurality of subfields.

For example, a Trigger type subfield for an HE terminal and a Trigger type 2 subfield for an EHT terminal may be different from each other. A Trigger type indicated in the Trigger type subfield is a type associated with version information compliant with HE, and a Trigger type indicated in the Trigger type 2 subfield may be a type associated with version information compliant with EHT.

Common Info generator 104 generates a Common Info field including the Trigger type subfield and the Trigger type 2 subfield, and outputs the generated Common Info field to Trigger frame generator 105.

The processing of other components in AP100 may be the same as the processing described in Embodiment 1, for example.

### [Configuration of Terminal]

An exemplary configuration of terminal 200 according to the present embodiment may be the same as that in FIG. 10. For example, in terminal 200 according to the present embodiment, operations of Trigger type configurator 204 and Common Info acquirer 205 may be different from those in Embodiment 1.

For example, when terminal 200 is an HE terminal, Trigger type configurator 204 may output a Trigger type table for an HE terminal to Common Info acquirer 205. Further, for example, when terminal 200 is an EHT terminal, Trigger type configurator 204 may output a Trigger type table for an HE terminal and a Trigger type table for an EHT terminal to Common Info acquirer 205.

For example, Common Info acquirer 205 extracts information on a Common Info field based on the Trigger frame inputted from error correction decoder 203 and the Trigger type table inputted from Trigger type configurator 204, and acquires terminal-common information that is for generating an uplink signal and includes a type of an uplink response signal (e.g., including a type of data to be transmitted or a time length of the uplink signal).

For example, when terminal 200 is an HE terminal, Common Info acquirer 205 may identify a Trigger type from a Trigger type subfield in the Common Info field using the Trigger type table for an HE terminal. Further, for example, when terminal 200 is an EHT terminal, Common Info acquirer 205 may identify a Trigger type from the Trigger type subfield and a Trigger type 2 subfield in the Common Info field using respective Trigger type tables for an HE terminal and an EHT terminal. (The example will be described later.)

The processing of other components in terminal 200 may be the same as the processing described in Embodiment 1, for example.

### <Trigger Type Table for EHT Terminal>

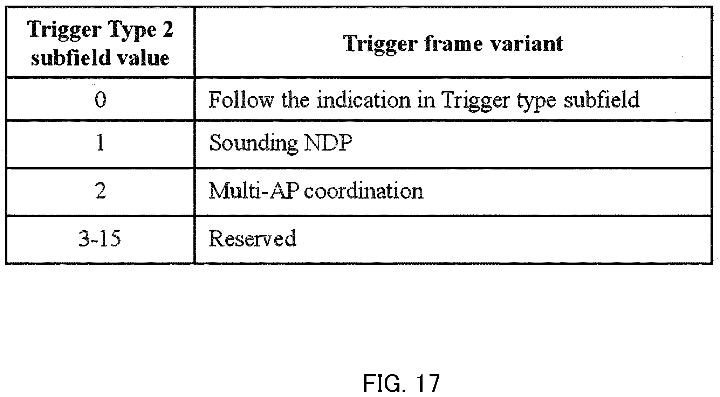

FIG. 17 illustrates an exemplary Trigger type table for an EHT terminal included in a subfield different from a Trigger type subfield for an HE terminal.

In FIG. 17, Trigger Type 2 subfield value = 0 means to follow the indication in the Trigger Type subfield for an HE terminal (e.g., FIG. 5), for example. In this case, an EHT terminal acquires a Trigger type indicated in the Trigger type subfield. In other words, when Trigger Type 2 subfield value = 0, the same Trigger type is indicated to both an EHT terminal and an HE terminal by the Trigger frame. Further, in FIG. 17, Trigger Type 2 subfield value = 1 or 2 means a Trigger type that is for an EHT terminal and unsupported by an HE terminal (e.g., NDP transmission for Sounding or coordinated communication), for example.

In this case, AP 100 and terminal 200 may configure, in a plurality of subfields on a Trigger type in a Trigger frame, a Trigger type subfield value for an HE terminal (terminal 200 whose version is compliant with HE) using a Trigger type subfield (e.g., FIG. 5), and a Trigger type subfield value for an EHT terminal (terminal 200 whose version is compliant with EHT) using both a Trigger type subfield (e.g., FIG. 5) and a Trigger type 2 subfield (e.g., FIG. 17).

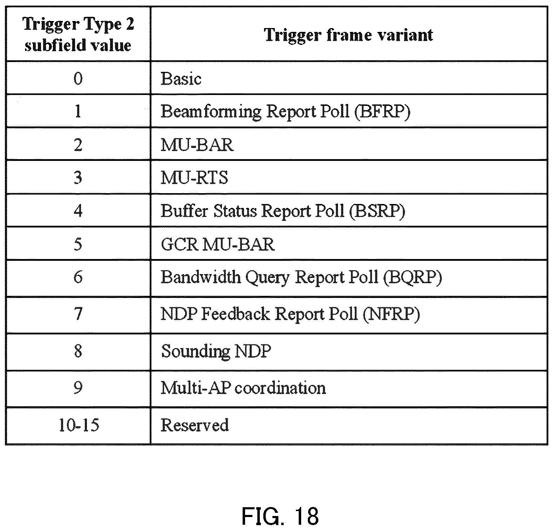

FIG. 18 illustrates another exemplary Trigger type table for an EHT terminal.

As illustrated in FIG. 18, a Trigger type table for an EHT terminal may include Trigger Types (e.g., Trigger Type 2 subfield value = 0 to 7) for an HE terminal, in addition to Trigger Type 2 subfield value = 8 and 9 for an EHT terminal. In this case, AP 100 and terminal 200 may configure, in a plurality of subfields on a Trigger type in a Trigger frame, a Trigger type subfield value for an HE terminal using a Trigger type subfield (e.g., FIG. 5), and a Trigger type subfield value for an EHT terminal using a Trigger type 2 subfield (e.g., FIG. 17), for example.

Configuring a Trigger type table (or Trigger type subfield) individually for each of an HE terminal and an EHT terminal allows AP 100 to indicate different Trigger types to an HE terminal and an EHT terminal, respectively, for example. This makes it possible to individually configure a Trigger type that is frequently used for each of an HE terminal and an EHT terminal, and thus the system performance can be enhanced.

### <Exemplary Operation of Common Info Generator 104 and Common Info Acquirer 205>

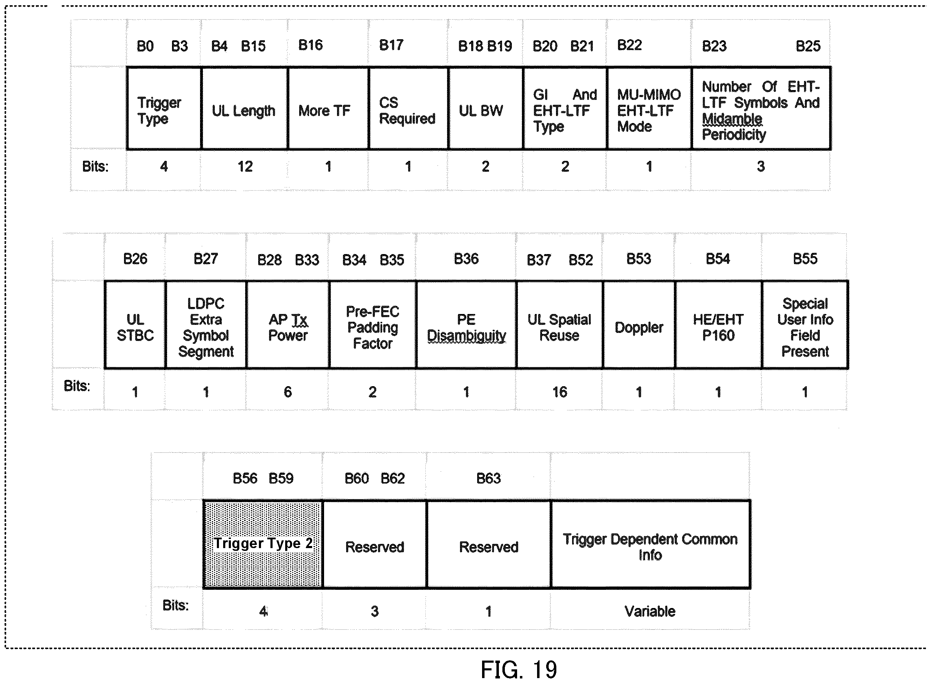

FIG. 19 illustrates an exemplary Common Info field according to the present embodiment.

As illustrated in FIG. 19, a Trigger type 2 subfield for an EHT terminal may be configured in a Reserved field in a Common Info field defined in HE (e.g., FIG. 2). For example, in a Common Info field illustrated in FIG. 2 or FIG. 19, a field (subfield) corresponding to B56 to B59 is a subfield whose configuration is varied depending on the version of the radio communication standard (e.g., HE or EHT).

Further, sizes of a Trigger Dependent Common Info subfield and a Trigger Dependent User Info subfield for an EHT terminal may match with those for an HE terminal. This allows EHT to maintain backward compatibility.

For example, an HE terminal may identify a Trigger type based on a Trigger type subfield (e.g., B0 to B3) illustrated in FIG. 19, for example. Note that the HE terminal need not receive a Trigger Type 2 subfield because the HE terminal interprets the Trigger Type 2 subfield illustrated in FIG. 19 as a Reserved field.

Further, for example, an EHT terminal receives the Trigger type 2 subfield (e.g., B56 to B59) illustrated in FIG. 19. For example, in a case where an EHT terminal refers to the Trigger type table illustrated in FIG. 17, when Trigger Type 2 subfield value = 0 is indicated, the EHT terminal may identify a Trigger type further based on the Trigger type subfield (e.g., B0 to B3) illustrated in FIG. 19. Furthermore, in a case where an EHT terminal refers to the Trigger type table illustrated in FIG. 18, for example, the EHT terminal may identify a Trigger type based on the Trigger type 2 subfield and need not receive the Trigger type subfield (e.g., B0 to B3).

AP 100 can separately indicate, to an HE terminal, a Trigger type that is different from that for an EHT terminal even when AP 100 indicates a Trigger type unsupported by an HE terminal to an EHT terminal. Thus, the HE terminal need not stop receiving a Trigger frame based on a Trigger type for an HE terminal even when a Trigger type for an EHT terminal is not supported by an HE terminal, for example. Therefore, uplink response signals are generated in both an EHT terminal and an HE terminal, so that application of an A-PPDU is enabled.

Thus, according to the present embodiment, AP 100 can indicate an A-PPDU to a plurality of terminals 200 including an HE terminal and an EHT terminal with one Trigger frame indicating a new Trigger type for an EHT terminal (in other words, a Trigger type unsupported in HE).

Note that control information on an A-PPDU may be indicated to each terminal 200 in any field (e.g., may be a User Info field) in a Trigger frame, for example.

Further, a Trigger type 2 subfield for an EHT terminal is included in a Subfield (e.g., Reserved field) transmitted regardless of the Trigger type in the Common Info field, for example. Thus, the bit position at which a Trigger type for an EHT terminal is extracted does not change depending on the Trigger type, which can simplify the reception processing in terminal 200.

The embodiments of the present disclosure have been described above.

### (Other Embodiments)

(1) In the above-described embodiments, the Trigger type new to HE is not limited to the Trigger type newly added to EHT. In other words, the version of the radio communication standard is not limited to HE and EHT, and may be another version. For example, an embodiment of the present disclosure is similarly applied to a Trigger type newly added to a future version from EHT (e.g., referred to as EHT+). In this case, the operation of the EHT terminal in the above-described embodiments may be replaced with an operation of a terminal corresponding to EHT+ (e.g., EHT+ terminal).

For example, AP 100 and terminal 200 may change the format of a Common Info field (e.g., change the meanings of one or some of Subfields) depending on whether a Trigger type is a type compliant with EHT+ (Trigger type newly supported in EHT+), EHT, or HE.

This makes it possible to apply a Common Info field whose format is different between an EHT+ terminal and an EHT terminal or an HE terminal, so that the same advantages as those of the above-described embodiments can be obtained.

Note that the format of the Common Info field is not limited to a case where the formats are configured in two types between an EHT-compliant type and an HE-compliant type, and may be configured in three types between an EHT+-compliant type, an EHT-compliant type, and an HE-compliant type, or may be configured in four types or more.

(2) In the above-described embodiments, the format of the Common Info field is configured depending on the version information associated with a Trigger type, but the present disclosure is not limited thereto, and one or some of subfields of a User Info field format may be configured depending on the version information associated with the Trigger type.

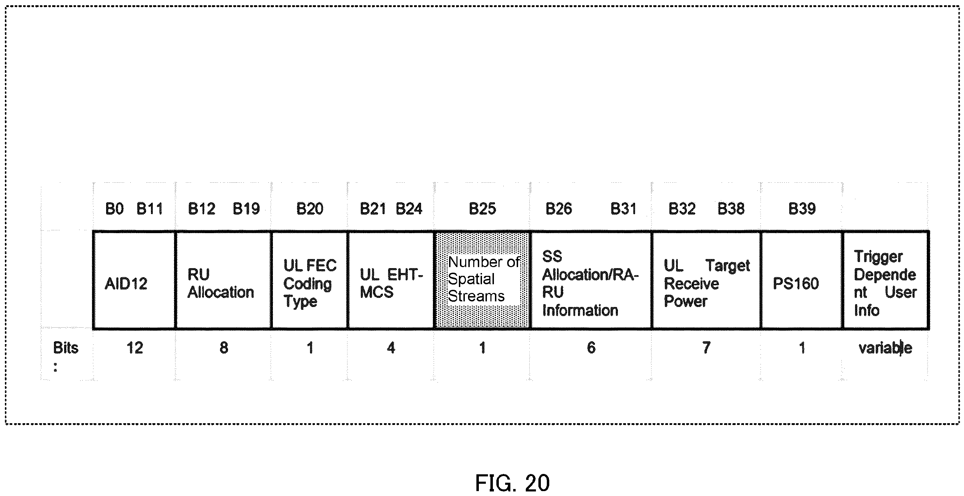

For example, in a case where an NDP for sounding, which is a Trigger type compliant with EHT, is indicated in a Trigger frame, a stream number of an EHT-LTF ("Number of Spatial Streams" subfield) may be included in a subfield (e.g., B25) that is a Reserved field when a Trigger type is compliant with HE (e.g., FIG. 3), as illustrated in FIG. 20.

Note that a subfield configured depending on the version information in a User Info field is not limited to the stream number of an EHT-LTF, and may be another information.

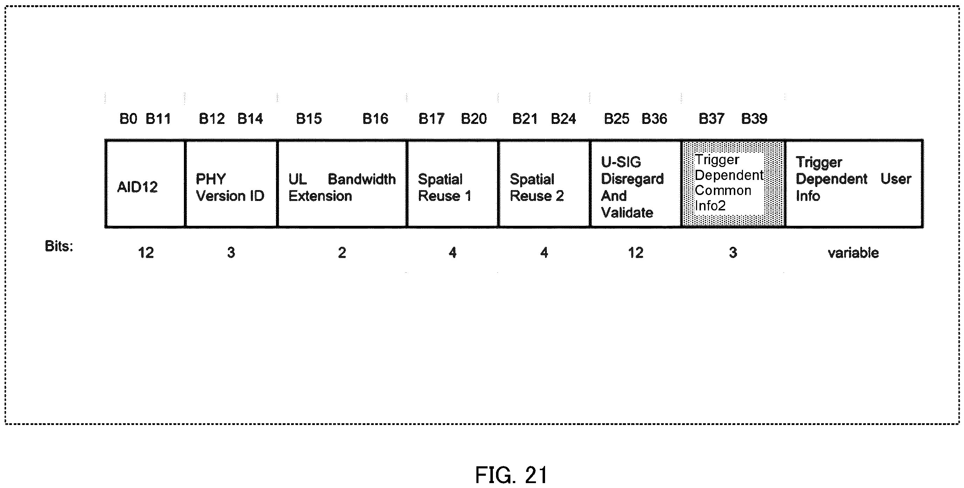

Further, for example, one or some of subfields of a Special User Info field format may be configured depending on the version information associated with the Trigger type in the above-described embodiments. For example, in a case where a Trigger type compliant with EHT is indicated in a Trigger frame, the second Trigger dependent Common Info field (Trigger dependent Common Info 2) may be configured in a subfield (e.g., B37 to B39) that is a Reserved field when a Trigger type is compliant with HE (e.g., FIG. 4), as illustrated in FIG. 21.

Note that a subfield configured in a Special User Info field depending on the version information is not limited to the second Trigger Dependent Common Info field, and another field may be configured. In addition, a subfield configured in a Special User Info field depending on the version information may be at least one bit of Reserved field (e.g., B37 to B39) when a Trigger type is compliant with HE.

(3) In the above-described embodiment, Trigger types indicating an NDP for Sounding and coordinated communication have been described as Trigger types that are compliant with EHT, but a Trigger type compliant with EHT or a future version is not limited thereto.

Examples of the Trigger type configured in EHT or a future version may include a type for prompting data transmission to which uplink beamforming is applied. In this case, a User Info field may include beamforming information to be applied to terminal 200.

(4) In the above-described embodiment, a method has been described in which a format of a Common Info field is configured (changed) depending on a Trigger type associated with version information such as a version compliant with HE or EHT, but the information associated with the version information is not limited to the Trigger type, and may be another information.

For example, information on any type indicated by a Trigger frame and the version information may be associated with each other, and a format of at least one of a Common Info field, a User Info field, and a Special User Info field may be configured depending on the information on the type.

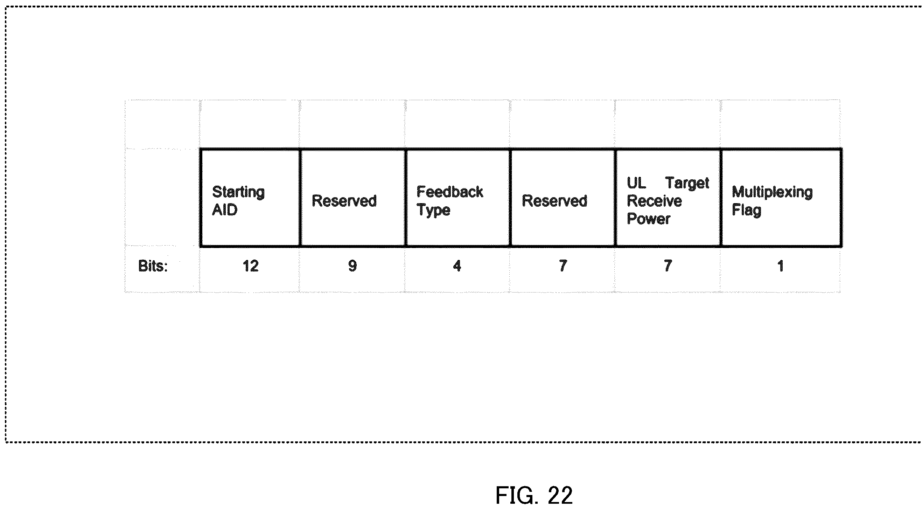

FIG. 22 illustrates an exemplary HE-compliant User Info field used when a Trigger type is NFRP (type indicating transmission of an NDP feedback report to terminal 200).

The "Feedback Type" subfield illustrated in FIG. 22 includes information on types to be fed back to a plurality of terminals 200 indicated by Starting AID. In HE, for example, one type called a Resource request (resource allocation request) is supported as a Feedback Type. For example, in a case where AP 100 indicates a Resource request to an HE terminal as a Feedback Type, the HE terminal may hold data to be transmitted and feed back an NDP to AP 100 as a response signal when requesting resource allocation.

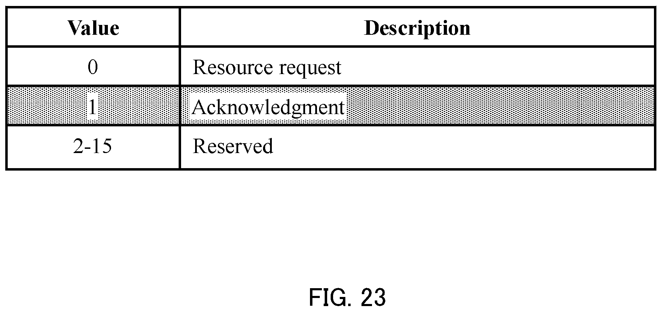

A new Feedback Type is possibly supported in EHT or EHT+. For example, as illustrated in FIG. 23, Acknowledgement (information on whether data has been correctly decoded) is possibly added to EHT as a new value of a Feedback Type.

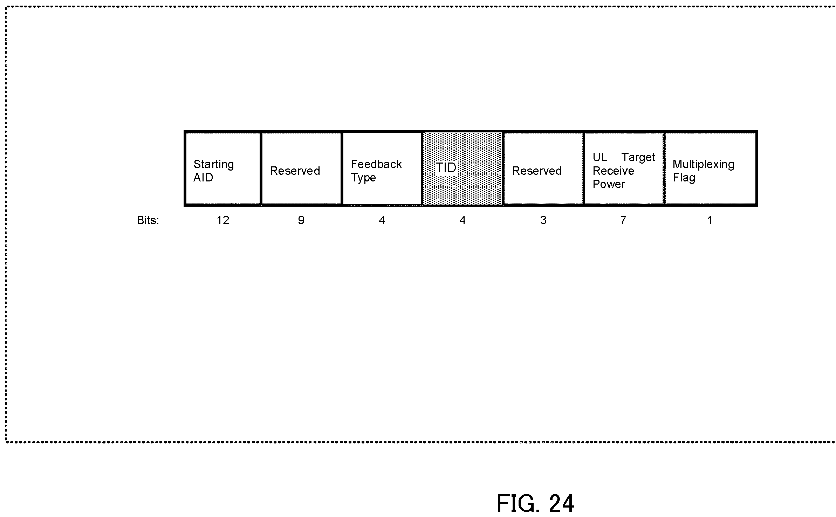

In this case, for example, as in Embodiment 1, AP 100 may configure a format of a User Info field corresponding to a version compliant with EHT when AP 100 transmits Acknowledgement as a Feedback Type for an EHT terminal. Further, when an EHT terminal receives Acknowledgement as a Feedback Type, the EHT terminal may perform reception processing based on the format of the User Info field that corresponds to the version compliant with EHT and is different from a format compliant with HE. For example, as illustrated in FIG. 24, in a User Info field corresponding to a version compliant with EHT, one or some of the Reserved fields in HE may be configured as (changed to) a TID subfield (an identifier indicating a type of traffic). Thus, AP 100 can cause an EHT terminal to feed back Acknowledgment information on the traffic type indicated by TID. Further, when an HE terminal receives Acknowledgment as a Feedback Type, the HE terminal may stop the reception processing.

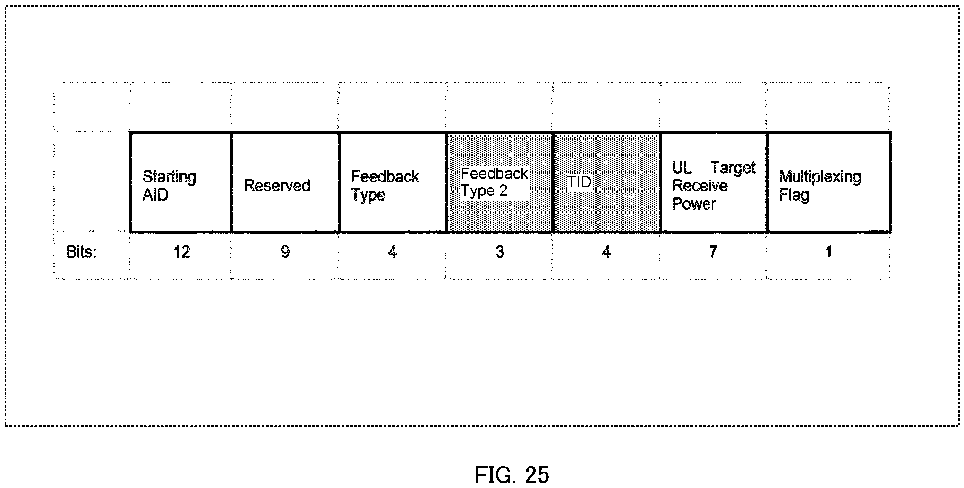

Alternatively, as in Embodiment 2, AP 100 may individually indicate a Feedback Type to each of an EHT terminal and an HE terminal using different subfields, for example. For example, as illustrated in FIG. 25, one or some of the Reserved fields in HE may be configured as (e.g., changed to) a Feedback Type subfield (e.g., Feedback Type 2 subfield) and a TID subfield for an EHT terminal. Thus, as in Embodiment 2, AP 100 can indicate a Feedback Type individually to each of an HE terminal and an EHT terminal with one Trigger frame. For example, AP 100 may indicate a Resource request to an HE terminal and Acknowledgment to an EHT terminal with one Trigger frame.

Note that the Feedback type for an EHT terminal is not limited to Acknowledgement, and may be information on another type. Further, the information configured for a Feedback type for an EHT terminal is not limited to TID, and may be another information.

(5) An additional new version from EHT has been described with the term "EHT+," but is not limited thereto and may be described with another term.

A transmission access scheme of an uplink response signal for a Trigger frame is not limited to OFDMA, and may be another scheme.

Further, the above-described embodiments have been described based on a format of 11be as an example, but the format to which an embodiment of the present disclosure is applied is not limited to the format of 11be. An embodiment of the present disclosure may be applied to, for example, IEEE 802.11bd (Next Generation V2X (NGV)), which is a next generation standard from IEEE 802. 11p, which is an on-vehicle standard.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a Field Programmable Gate Array (FPGA) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A base station according to an embodiment of the present disclosure includes: control circuitry, which, in operation, generates a control signal for uplink transmission, the control signal including information on a version of a radio communication standard and a subfield whose configuration is varied depending on the version in a field common to a plurality of terminals; and transmission circuitry, which, in operation, transmits the control signal.

In the embodiment of the present disclosure, the information on the version is associated with a type of the control signal.

In the embodiment of the present disclosure, the version is High Efficiency (HE) when a value on the type is equal to or less than a threshold value, and the version is Extreme High Throughput (EHT) when the value is more than the threshold value.

In the embodiment of the present disclosure, the base station further includes reception circuitry, which, in operation, receives a response signal for the control signal based on the version associated with the type.

In the embodiment of the present disclosure, the control circuitry varies the configuration of at least one or some of subfields in the common field in accordance with the version, the one or some of subfields being different from a first subfield that depends on a type of the control signal.

In the embodiment of the present disclosure, the one or some of the subfields includes at least one of a UL Space Time Block Coding (STBC) subfield, a UL Spatial Reuse subfield, a Doppler subfield, and/or a Reserved subfield.

In the embodiment of the present disclosure, the control circuitry configures the one or some of the subfields as a second subfield that depends on the type when the version is Extreme High Throughput (EHT).

In the embodiment of the present disclosure, the transmission circuitry transmits information that depends on the type using both the first subfield and the second subfield.

In the embodiment of the present disclosure, the control circuitry configures, in the common field, information on a type of the control signal using a plurality of subfields.

In the embodiment of the present disclosure, the control circuitry configures information on the type for a terminal whose version corresponds to High Efficiency (HE) using a first subfield, and configures information on the type for a terminal whose version corresponds to Extreme High Throughput (EHT) using a second subfield, in the plurality of subfields.

In the embodiment of the present disclosure, the second subfield is configured in a Reserved field in the control signal when the version is HE.

In the embodiment of the present disclosure, the control circuitry configures information on the type for a terminal whose version corresponds to EHT using both the first subfield and the second subfield.

A terminal according to an embodiment of the present disclosure includes: reception circuitry, which, in operation, receives a control signal for uplink transmission, the control signal including information on a version of a radio communication standard and a subfield whose configuration is varied depending on the version in a field common to a plurality of terminals; and control circuitry, which, in operation, determines the configuration based on the information on the version.

In a communication method according to an embodiment of the present disclosure, a base station generates a control signal for uplink transmission, the control signal including information on a version of a radio communication standard and a subfield whose configuration is varied depending on the version in a field common to a plurality of terminals, and transmits the control signal.

In a communication method according to an embodiment of the present disclosure, a terminal receives a control signal for uplink transmission, the control signal including information on a version of a radio communication standard and a subfield whose configuration is varied depending on the version in a field common to a plurality of terminals, and determines the configuration based on the information on the version.

The disclosures of Japanese Patent Applications No. 2021-081515, filed on May 13, 2021, including the specification, drawings and abstract, is incorporated herein by reference in its entirety.

### Industrial Applicability

An exemplary embodiment of the present disclosure is useful for radio communication systems.

### Reference Signs List

100 AP
101 Scheduler
102 User Info generator
103, 204 Trigger type configurator
104 Common Info generator
105 Trigger frame generator
106, 209 Error correction encoder
107, 210 Modulator
108, 201 Radio transceiver
109, 202 Demodulator
110, 203 Error correction decoder
111 Terminal information acquirer
200 Terminal
205 Common Info acquirer
206 User Info acquirer
207 Format determiner
208 Data generator

## Claims

1. A base station, comprising:
control circuitry, which, in operation, generates a control signal for uplink transmission, the control signal including information on a version of a radio communication standard and a subfield whose configuration is varied depending on the version in a field common to a plurality of terminals; and
transmission circuitry, which, in operation, transmits the control signal.

2. The base station according to claim 1, wherein
the information on the version is associated with a type of the control signal.

3. The base station according to claim 2, wherein
the version is High Efficiency (HE) when a value on the type is equal to or less than a threshold value, and the version is Extreme High Throughput (EHT) when the value is more than the threshold value.

4. The base station according to claim 2, further comprising reception circuitry, which, in operation, receives a response signal for the control signal based on the version associated with the type.

5. The base station according to claim 1, wherein
the control circuitry varies the configuration of at least one or some of subfields in the common field in accordance with the version, the one or some of subfields being different from a first subfield that depends on a type of the control signal.

6. The base station according to claim 5, wherein
the one or some of the subfields includes at least one of a UL Space Time Block Coding (STBC) subfield, a UL Spatial Reuse subfield, a Doppler subfield, and/or a Reserved subfield.

7. The base station according to claim 5, wherein
the control circuitry configures the one or some of the subfields as a second subfield that depends on the type when the version is Extreme High Throughput (EHT).

8. The base station according to claim 7, wherein
the transmission circuitry transmits information that depends on the type using both the first subfield and the second subfield.

9. The base station according to claim 1, wherein
the control circuitry configures, in the common field, information on a type of the control signal using a plurality of subfields.

10. The base station according to claim 9, wherein
the control circuitry configures information on the type for a terminal whose version corresponds to High Efficiency (HE) using a first subfield, and configures information on the type for a terminal whose version corresponds to Extreme High Throughput (EHT) using a second subfield, in the plurality of subfields.

11. The base station according to claim 10, wherein
the second subfield is configured in a Reserved field in the control signal when the version is HE.

12. The base station according to claim 10, wherein
the control circuitry configures information on the type for a terminal whose version corresponds to EHT using both the first subfield and the second subfield.

13. A terminal, comprising:
reception circuitry, which, in operation, receives a control signal for uplink transmission, the control signal including information on a version of a radio communication standard and a subfield whose configuration is varied depending on the version in a field common to a plurality of terminals; and
control circuitry, which, in operation, determines the configuration based on the information on the version.

14. A communication method, comprising:
generating, by a base station, a control signal for uplink transmission, the control signal including information on a version of a radio communication standard and a subfield whose configuration is varied depending on the version in a field common to a plurality of terminals; and
transmitting, by the base station, the control signal.

15. A communication method, comprising:
receiving, by a terminal, a control signal for uplink transmission, the control signal including information on a version of a radio communication standard and a subfield whose configuration is varied depending on the version in a field common to a plurality of terminals; and
determining, by the terminal, the configuration based on the information on the version.
